# EUROPEAN PATENT APPLICATION

(11) **EP 2 455 807 A1**
(43) Date of publication of application: **23.05.2012**
(21) Application number: 11815606.6
(22) Date of filing: 05.09.2011
(51) Int. Cl.: G03B 15/05, G03B 15/03, H01J 61/54, H01J 61/80

(54) **STROBE DEVICE AND PORTABLE APPARATUS**

(30) Priority: 09.09.2010 JP 2010201652
(71) Applicant: Panasonic Corporation, Osaka 571-8501 (JP)
(72) Inventor: OGINO, Yasushi, (JP); AMARI, Satoshi, (JP)
(74) Representative: Kügele, Bernhard
(86) International application number: PCT/JP2011/004954
(87) International publication number: WO 2012/032756

(57) **Abstract**

A strobe device of the present invention includes a flash discharge tube; a plurality of external triggering electrodes formed on an outer surface of the flash discharge tube; a trigger circuit that outputs a trigger signal to the external triggering electrodes causing the flash discharge tube to emit light at predetermined timing; and a control unit that controls and directs the trigger circuit to switch between a first mode in which a voltage is applied to any of the plurality of external triggering electrodes having a predetermined attachment area to the flash discharge tube, and a second mode in which a voltage is applied to another of the external triggering electrodes having an area larger than the predetermined area.

## Description

### TECHNICAL FIELD

The present invention relates to a strobe device and a mobile device.

### BACKGROUND ART

In the related art, strobe device 1 shown in Fig. 6 is known (for example, see PTL 1). Fig. 6 is a circuit block diagram of a conventional strobe device.

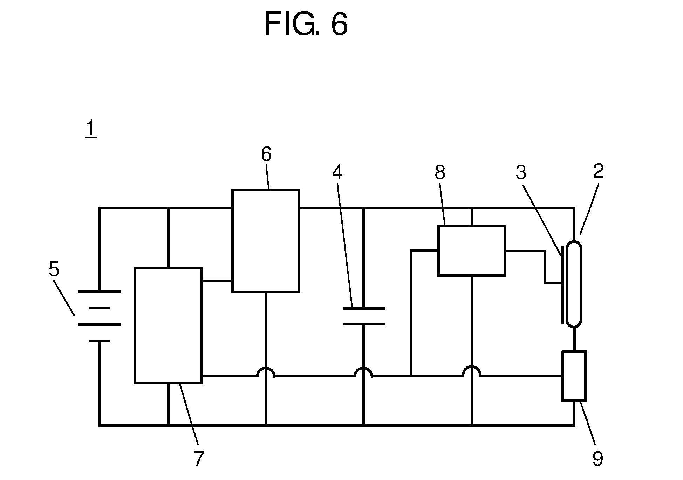

As shown in Fig. 6, strobe device 1 includes flash discharge tube 2 formed, for example, of a glass tube, external triggering electrode 3, capacitor 4, battery power supply 5, boost chopper circuit 6, control unit 7, trigger circuit 8, and switch circuit 9. External triggering electrode 3 applies a voltage for causing flash discharge tube 2 to emit light. Capacitor 4 stores electric power that makes flash discharge tube 2 emit light. Battery power supply 5 supplies the electric power to be stored in capacitor 4. Boost chopper circuit 6 boosts a voltage of battery power supply 5 to a voltage that makes flash discharge tube 2 emit light. Control unit 7 controls the overall operation of strobe device 1. Trigger circuit 8 applies a voltage to external triggering electrode 3 at predetermined timing to make flash discharge tube 2 emit light. Switch circuit 9 controls a light emission period of flash discharge tube 2 in accordance with a light emission quantity necessary for photographing.

External triggering electrode 3 is arranged along an outer surface of flash discharge tube 2 so as to extend linearly in the tube axis (tube length) direction. When external triggering electrode 3 is arranged so as to elongate in the tube length direction of flash discharge tube 2, for example, external triggering electrode 3 generates a discharge in flash discharge tube 2 at a position close to external triggering electrode 3. In this case, since the discharge is generated at the position close to external triggering electrode 3, in particular, when control unit 7 controls a small quantity of light emission in a dimming mode, it is possible to stabilize a discharge path of flash discharge tube 2. As a result, it is possible to decrease a fluctuation of light quantity in each light emission of flash discharge tube 2.

In general, in strobe device 1 shown in Fig. 6, small flash discharge tube 2 which is elongated in the tube length direction is used as flash discharge tube 2. Thus, when small flash discharge tube 2 emits a large quantity of light, it is necessary to emit light using external triggering electrode 3 that is elongated in the tube length direction.

However, when flash discharge tube 2 emits light using external triggering electrode 3 that is elongated in the tube length direction, a damage is accumulated in a glass tube that constitutes flash discharge tube 2 near external triggering electrode 3, and a crack or the like is likely to occur in the glass tube. When a crack occurs in the glass tube, there is a problem in that flash discharge tube 2 does not emit light.

### Citation List

Patent Literature
   PTL 1: Japanese Patent Unexamined Publication No. 2007-108545

### SUMMARY OF THE INVENTION

A strobe device of the present invention includes a flash discharge tube; a plurality of external triggering electrodes formed on an outer surface of the flash discharge tube; a trigger circuit that outputs a trigger signal to the external triggering electrodes making the flash discharge tube emit light at predetermined timing; and a control unit that controls and directs the trigger circuit to switch between a first mode in which a voltage is applied to any of the plurality of external triggering electrodes having a predetermined attachment area to the flash discharge tube, and a second mode in which a voltage is applied to another of the external triggering electrodes having an area larger than the predetermined area.

With this configuration, it is possible to realize a strobe device having excellent reliability in which a fluctuation of light quantity in each light emission is decreased when a small quantity of light is emitted, and a damage to the flash discharge tube is suppressed when a large quantity of light is emitted.

### BRIEF DESCRIPTION OF DRAWINGS

Fig. 1A is a perspective view seen from the outer side of a mobile device including a strobe device according to an exemplary embodiment of the present invention.
Fig. 1B is a perspective view seen from the inner side of the mobile device including the strobe device according to the exemplary embodiment.
Fig. 2A is a cross-sectional view in a longitudinal direction, illustrating a configuration of a flash discharge tube of the strobe device according to the exemplary embodiment.
Fig. 2B is a side view illustrating a configuration of the flash discharge tube of the strobe device according to the exemplary embodiment.
Fig. 3A is a perspective view illustrating another example of the configuration of the flash discharge tube of the strobe device according to the exemplary embodiment.
Fig. 3B is a side view illustrating another example of the configuration of the flash discharge tube of the strobe device according to the exemplary embodiment.
Fig. 4 is a circuit block diagram of the strobe device according to the exemplary embodiment.
Fig. 5 is a circuit block diagram of a strobe device according to a second exemplary embodiment of the present invention.
Fig. 6 is a circuit block diagram of a conventional strobe device.

### DESCRIPTION OF EMBODIMENTS

Hereinafter, a strobe device and a mobile device according to exemplary embodiments of the present invention will be described with reference to the drawings. In the following description, the same or corresponding constituent elements will be denoted by the same reference marks.

### FIRST EXEMPLARY EMBODIMENT

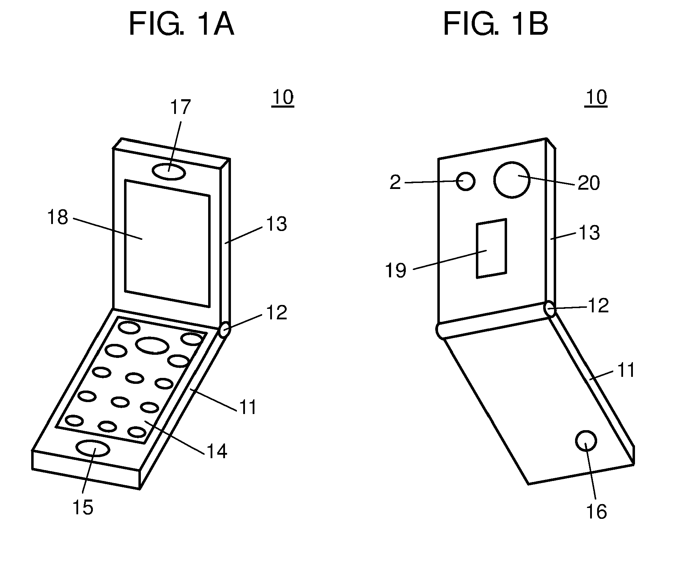

Hereinafter, a strobe device and a mobile device according to a first exemplary embodiment of the present invention will be described with reference to Figs. 1A to 4.

First, the mobile device including the strobe device according to the first exemplary embodiment of the present invention will be described with reference to Figs. 1A and 1B.

Fig. 1A is a perspective view seen from the outer side of the mobile device including the strobe device according to the first exemplary embodiment of the present invention. Fig. 1B is a perspective view seen from the inner side of the mobile device including the strobe device according to the exemplary embodiment. Mobile device (hereinafter sometimes referred to as a "mobile phone") 10 is a mobile phone or the like in which a flash function and a digital camera function are mounted, for example.

As shown in Figs. 1A and 1B, mobile device 10 includes first main body 11 and second main body 13. First main body 11 and second main body 13 are connected so that they are freely folded with hinge mechanism 12 disposed therebetween.

As shown in Fig. 1A, operation key unit 14 which includes number keys and the like, for example and allows a user to input operations on mobile phone 10 and microphone 15 through which the user inputs voice are formed on a surface of first main body 11 which becomes an inner surface when mobile phone 10 is folded. Moreover, as shown in Fig. 1B, sounder 16 that notifies the user of a state of incoming calls or the like is formed on a surface of first main body 11 which becomes an outer surface when mobile phone 10 is folded.

On the other hand, as shown in Fig. 1A, speaker 17 through which received voice is output and first display 18 that displays characters, images, or the like, for example are formed on a surface of second main body 13 which becomes the inner surface when mobile phone 10 is folded. Moreover, as shown in Fig. 1B, second display 19 that displays characters, images, or the like, for example, similarly to first display 18, flash discharge tube 2 which has the flash function and radiates light, optical system 20 that focuses light reflected from a subject (for example, light such as the light of flash discharge tube 2 or sunlight), and the like are formed on a surface of second main body 13 which becomes the outer surface when mobile phone 10 is folded. Here, optical system 20 includes an autofocus mechanism which includes an objective lens configured to be displaceable in relation to an image pickup device made up of a CMOS image sensor or a CCD image sensor, for example.

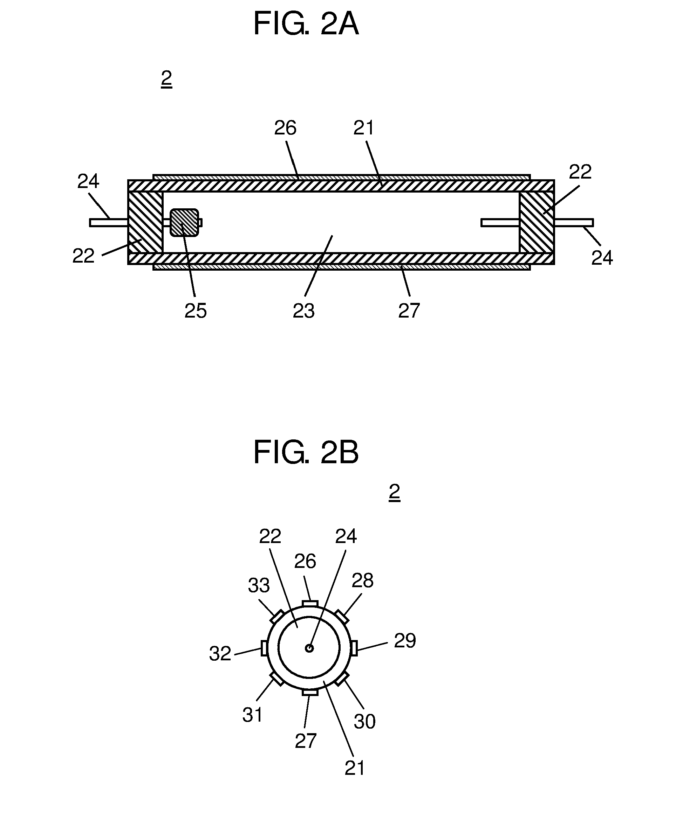

Next, the flash discharge tube of the strobe device according to the first exemplary embodiment will be described with reference to Figs. 2A and 2B.

Fig. 2A is a cross-sectional view in a longitudinal direction, illustrating a configuration of the flash discharge tube of the strobe device according to the exemplary embodiment. Fig. 2B is a side view illustrating a configuration of the flash discharge tube of the strobe device according to the exemplary embodiment.

As shown in Figs. 2A and 2B, flash discharge tube 2 includes cylindrical glass valve 21, bead glass 22, a pair of electrode 24, and plural (in the present exemplary embodiment, eight) external triggering electrodes made up of first to eighth external triggering electrodes 26 to 33, for example. In this case, bead glass 22 is welded to both end portions of glass valve 21 so as to seal openings at both ends of glass valve 21. A pair of Electrode 24 is formed of a lead-in wire that is welded in a state of being inserted into bead glass 22, and one electrode 24 (electrode 24 sealed to one end portion of glass valve 21) includes sintered metal 25 at one end portion thereof that is located inside glass valve 21.

Sintered metal 25 is formed by molding a mixture of fine metal powder of tungsten and tantalum, or a mixture of fine metal powder of tantalum and nickel, for example, into a predetermined shape and sintering a resultant material at a temperature of about 600°C, for example. Obtained sintered metal 25 is attached to one end portion which is an extension portion of a pair of electrode 24 so as to be integral with electrode 24 by caulking, for example. Moreover, glass valve 21 is formed of hard glass such as borosilicate glass, for example, and noble gas 23 such as xenon, for example, is encapsulated in glass valve 21 at predetermined pressure.

First, second, third, fourth, fifth, sixth, seventh, and eighth external triggering electrodes 26, 27, 28, 29, 30, 31, 32, and 33, for example, which are the plural external triggering electrodes, are disposed, for example, uniformly in the circumferential direction, on an outer surface of glass valve 21 of flash discharge tube 2, and are formed along the tube length direction of flash discharge tube 2. In this case, first to eighth external triggering electrodes 26 to 33 are preferably formed of a transparent electrode made from a dielectric thin film of SnO₂ or ITO, for example, in order to improve light emission efficiency.

In the present exemplary embodiment, although eight (first to eighth) external triggering electrodes 26 to 33 have been described as an example of the external triggering electrodes, the number thereof is not limited to eight.

Moreover, in Figs. 2A and 2B, although the attachment areas (the products of the width in the circumferential direction and the length in the tube length direction) to flash discharge tube 2, of eight (first to eighth) external triggering electrodes 26 to 33 are described as being the same, the attachment areas are not limited to this. For example, the respective attachment areas to flash discharge tube 2, of first to eighth external triggering electrodes 26 to 33 may be different from each other.

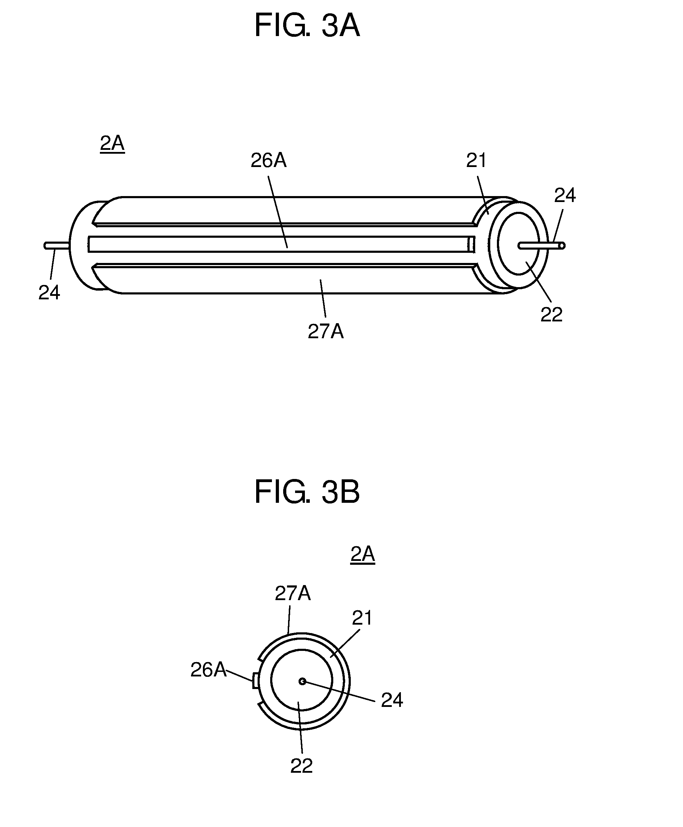

Hereinafter, another example of a configuration of the flash discharge tube of the strobe device according to the present exemplary embodiment will be described with reference to Figs. 3A and 3B.

Fig. 3A is a perspective view illustrating another example of the configuration of the flash discharge tube of the strobe device according to the exemplary embodiment. Fig. 3B is a side view illustrating another example of the configuration of the flash discharge tube of the strobe device according to the exemplary embodiment.

As shown in Figs. 3A and 3B, flash discharge tube 2A is different from flash discharge tube 2 shown in Figs. 2A and 2B in that external triggering electrodes include two (first and second) external triggering electrodes 26A and 27A. The other configuration is the same as that of flash discharge tube 2 shown in Figs. 2A and 2B, and redundant description thereof will not be provided.

That is, as shown in Figs. 3A and 3B, first external triggering electrode 26A is formed to be in contact with flash discharge tube 2 with a narrower attachment area than second external triggering electrode 27A. On the other hand, second external triggering electrode 27A is formed on a surface of flash discharge tube 2 at a position where first external triggering electrode 26A is not formed so as to cover a circumferential portion of flash discharge tube 2A. In this case, for example, second external triggering electrode 27A is formed so as to include second to eighth external triggering electrodes 27 to 33 of flash discharge tube 2 shown in Figs. 2A and 2B. The attachment area of first external triggering electrode 26A may be the same as or different from the attachment area of first external triggering electrode 26 of flash discharge tube 2 shown in Figs. 2A and 2B. However, when the attachment area of first external triggering electrode 26A is increased, it is necessary to decrease the attachment area of second external triggering electrode 27A so that second external triggering electrode 27A is not in contact with first external triggering electrode 26A.

In this way, flash discharge tubes 2 and 2A of the present first exemplary embodiment are configured.

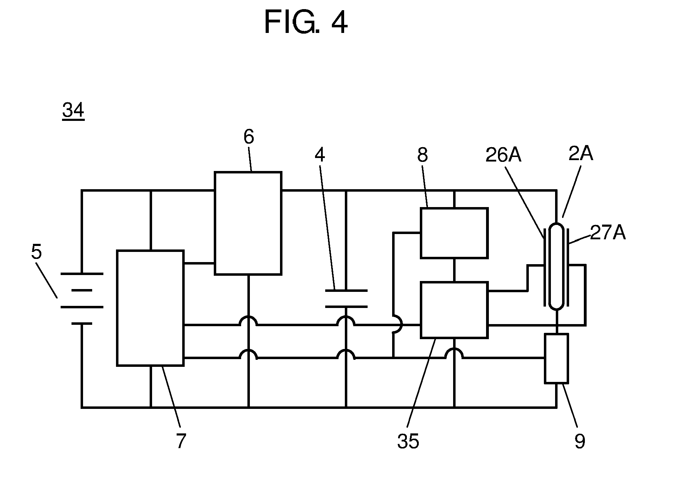

Hereinafter, the configuration and operation of the strobe device including the flash discharge tube having the above configuration will be described with reference to Fig. 4. The strobe device shown in Fig. 4 illustrates an example when flash discharge tube 2A shown in Figs. 3A and 3B is used.

Fig. 4 is a circuit block diagram of the strobe device according to the exemplary embodiment.

As shown in Fig. 4, strobe device 34 includes flash discharge tube 2A and first and second external triggering electrodes 26A and 27A described in Figs. 3A and 3B, capacitor 4, battery power supply 5, boost chopper circuit 6, control unit 7, trigger circuit 8, switch circuit 9, and switching unit 35.

Capacitor 4 is formed of an electrolytic capacitor, for example, and stores electric power that makes flash discharge tube 2A emit light. Battery power supply 5 is formed of a Li-ion secondary battery, for example, and supplies electric power to capacitor 4. Boost chopper circuit 6 boosts a voltage to be applied to the electrodes of flash discharge tube 2A and first and second external triggering electrodes 26A and 27A.

Moreover, trigger circuit 8 of strobe device 34 is connected to switching unit 35 so as to output a trigger signal that makes flash discharge tube 2 emit light at predetermined timing in accordance with the surrounding illuminance, for example, when a camera of a mobile device or the like photograrphs a subject. Switch circuit 9 controls ON/OFF of the light emission by flash discharge tube 2.

Moreover, switching unit 35 of strobe device 34 is connected to first and second external triggering electrodes 26A and 27A so as to switch between first and second modes, which are light emission modes of flash discharge tube 2A in accordance with a necessary light emission quantity. Here, the first mode is a mode in which application of a voltage stored in capacitor 4 to first external triggering electrode 26A whose attachment area to flash discharge tube 2 is determined to have a predetermined area is selected by means of the trigger signal of trigger circuit 8. The second mode is a mode in which application of the voltage stored in capacitor 4 to first and second external triggering electrodes 26A and 27A whose attachment areas are determined to have a larger area than those of the first mode is selected by means of the trigger signal of trigger circuit 8.

As shown in Figs. 2A and 2B, in the case of flash discharge tube 2 which includes eight external triggering electrodes of first to eighth external triggering electrodes 26 to 33 having the same electrode area, the first mode is a mode in which an optional combination of one external triggering electrode to seven external triggering electrodes is selected. The second mode is a mode in which an optional combination of two external triggering electrodes to eight external triggering electrodes is selected in accordance with the combination used in the first mode so that the number of selected external triggering electrodes is at least larger than the number of external triggering electrodes selected in the first mode. Specifically, when seven external triggering electrodes are selected in the first mode, all the eight external triggering electrodes are selected in the second mode. Moreover, when one external triggering electrode is selected in the first mode, a combination of two external triggering electrodes to eight external triggering electrodes is selected in the second mode. In this way, it is possible to increase the attachment area of the external triggering electrode in the second mode to be larger than the attachment area of the external triggering electrode in the first mode. However, when the electrode areas of eight (first to eighth) external triggering electrodes 26 to 33 are different from each other, the external triggering electrodes are combined so that the electrode area of the external triggering electrodes selected in the second mode is larger than the electrode area of the external triggering electrodes selected in the first mode. Here, the fact that the attachment area can be increased implies that in the first mode, there is a quite limitation in the attachment direction of flash discharge tube 2 assembled into the strobe device when two external triggering electrodes are selected, for example. On the other hand, the fact implies that in the second mode, there is a small limitation in the attachment direction of flash discharge tube 2 since eight external triggering electrodes are formed to be uniformly, for example.

Therefore, in the first exemplary embodiment, switching unit 35 switches between the first mode in which first external triggering electrode 26A is selected as one to which a voltage is to be applied and the second mode in which first and second external triggering electrodes 26A and 27A are selected as one to which a voltage is to be applied.

Strobe device 34 of the first exemplary embodiment is configured in a manner as described above.

Hereinafter, the operation of control unit 7 of strobe device 34 in the first exemplary embodiment will be described in detail with reference to Fig. 4.

Control unit 7 has a function of controlling a charging state where the electric power of battery power supply 5 is boosted by boost chopper circuit 6 and stored and a light emission state where the electric power stored in capacitor 4 is supplied to flash discharge tube 2. Moreover, control unit 7 has a function of controlling the output of the trigger signal by trigger circuit 8 and the switching of the first and second modes by switching unit 35 so as to make flash discharge tube 2 emit light at predetermined timing. Furthermore, control unit 7 has a function of controlling the timing at which flash discharge tube 2A starts and stops emitting light.

First, when mobile device 10 is powered on, control unit 7 causes boost chopper circuit 6 to boost the voltage of battery power supply 5 so as to be stored in capacitor 4. In this way, flash discharge tube 2A enters a state where it can emit light at any time.

Next, when a signal that makes flash discharge tube 2A of strobe device 34 emit light is input to mobile device 10, control unit 7 determines the quantity of light to be emitted by flash discharge tube 2A in accordance with a photographing environment. In this case, control unit 7 determines whether flash discharge tube 2A will emit light in the first mode or the second mode based on the determined light emission quantity. Moreover, control unit 7 determines the timing at which flash discharge tube 2A stops emitting light based on the determined light emission quantity and outputs a trigger signal to trigger circuit 8 and an emission start signal to switch circuit 9.

Subsequently, switching unit 35 switches between the first and second modes based on the mode determined by control unit 7. That is, switching unit 35 switches between the first mode in which first external triggering electrode 26A is selected to be supplied with the voltage and the second mode in which first and second external triggering electrodes 26A and 27A or second external triggering electrode 27A are selected to be supplied with the voltage. Specifically, when control unit 7 determines that flash discharge tube 2A should emit a small quantity of light, control unit 7 switches switching unit 35 to the first mode in which first external triggering electrode 26A is selected to be supplied with the voltage. Moreover, when control unit 7 determines that flash discharge tube 2A should emit a large quantity of light, control unit 7 switches switching unit 35 to the second mode in which first and second external triggering electrodes 26A and 27A or second external triggering electrode 27A are selected to be supplied with the voltage.

Subsequently, control unit 7 outputs a trigger signal to trigger circuit 8. Upon receiving the trigger signal, trigger circuit 8 boosts the trigger signal with a transformer circuit in trigger circuit 8 using charges supplied from a trigger capacitor (not shown). Then, trigger circuit 8 outputs the boosted voltage to switching unit 35 as the trigger signal.

Subsequently, switching unit 35 applied the boosted voltage to first external triggering electrode 26A or/and second external triggering electrode 27A as the trigger signal. That is, after switching between the first and second modes based on the control of control unit 7, switching unit 35 applies the voltage to the selected external triggering electrode to thereby make flash discharge tube 2A emit light.

Subsequently, switch circuit 9 stops light emission by flash discharge tube 2A based on an emission stop signal from control unit 7.

As described above, according to strobe device 34 of the present exemplary embodiment, when flash discharge tube 2A emits a small quantity of light, electric power is applied to only first external triggering electrode 26A of which the attachment area to flash discharge tube 2A is determined to have a predetermined area. On the other hand, when flash discharge tube 2A emits a large quantity of light, electric power can be applied to first and second external triggering electrodes 26A and 27A of which the attachment areas are determined to have a larger area than the predetermined area. In this way, when the flash discharge tube emits a small quantity of light, since the discharge path is stabilized, it is possible to decrease a fluctuation in light quantity in each light emission of the strobe device. Moreover, when the flash discharge tube emits a large quantity of light, since the discharge does not concentrate on a part of the flash discharge tube, or the discharge position changes at random, it is possible to distribute the damage to glass valve 21 and to extend the lifespan of the flash discharge tube.

### SECOND EXEMPLARY EMBODIMENT

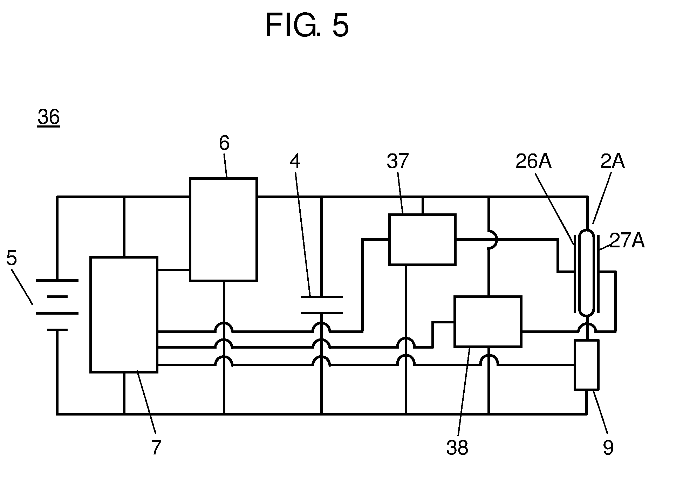

Next, a configuration example of a strobe device according to a second exemplary embodiment of the present invention will be described with reference to Fig. 5 as well as Figs. 1A to 4.

Fig. 5 is a circuit block diagram of the strobe device according to the second exemplary embodiment of the present invention. The strobe device shown in Fig. 5 illustrates an example when flash discharge tube 2A shown in Figs. 3A and 3B is used.

As shown in Fig. 5, strobe device 36 is different from strobe device 34 of the first exemplary embodiment in that it includes first and second trigger circuits 37 and 38 in place of trigger circuit 8 and switching unit 35 of strobe device 34 described in Fig. 4. The other configuration is the same as that of strobe device 34 of the first exemplary embodiment, and redundant description thereof will not be provided.

That is, as shown in Fig. 5, first trigger circuit 37 is connected to first external triggering electrode 26A, and second trigger circuit 38 is connected to second external triggering electrode 27A. Control unit 7 is connected to first and second trigger circuits 37 and 38.

Hereinafter, the operation of control unit 7 of strobe device 36 according to the second exemplary embodiment will be described in detail with reference to Fig. 5.

Control unit 7 has a function of controlling a charging state where the electric power of battery power supply 5 is boosted by boost chopper circuit 6 and stored and a light emission state where the electric power stored in capacitor 4 is supplied to flash discharge tube 2. Moreover, control unit 7 has a function of switching between a first mode in which first external triggering electrode 26A connected to first trigger circuit 37 is selected to be supplied with a voltage and a second mode in which first and second external triggering electrodes 26A and 27A connected to first and second trigger circuits 37 and 38 are selected to be supplied with the voltage so as to make flash discharge tube 2 emit light at predetermined timing. Furthermore, control unit 7 has a function of controlling the timing at which flash discharge tube 2 starts and stops emitting light.

First, when mobile device 10 is powered on, control unit 7 causes boost chopper circuit 6 to boost the voltage of battery power supply 5 so as to be stored in capacitor 4. In this way, flash discharge tube 2A enters a state where it can emit light at any time.

Next, when a signal that makes flash discharge tube 2A of strobe device 36 emit light is input to mobile device 10, control unit 7 determines the quantity of light to be emitted by flash discharge tube 2 in accordance with a photographing environment. In this case, control unit 7 determines whether flash discharge tube 2A will emit light in the first mode or the second mode based on the determined light emission quantity. Specifically, when control unit 7 determines that flash discharge tube 2 should emit a small quantity of light, control unit 7 selects the first mode in which the voltage is applied to first external triggering electrode 26A. On the other hand, when control unit 7 determines that flash discharge tube 2 should emit a large quantity of light, control unit 7 selects the second mode in which the voltage is applied to first and second external triggering electrodes 26A and 27A or second external triggering electrode 27A.

Moreover, control unit 7 determines the timing at which flash discharge tube 2A stops emitting light based on the determined light emission quantity and outputs a trigger signal to first trigger circuit 37 or/and second trigger circuit 38 and an emission start signal to switch circuit 9.

Subsequently, first trigger circuit 37 or/and second trigger circuit 38 boosts the input trigger signal with a transformer circuit provided in each of first trigger circuit 37 and second trigger circuit 38 using charges supplied from a trigger capacitor (not shown) based on the signal from control unit 7. Then, first trigger circuit 37 or second trigger circuit 38 outputs the trigger signal so as to make flash discharge tube 2A emit light at predetermined timing. The bootsted voltage is applied to first external triggering electrode 26A or/and second external triggering electrode 27A as the trigger signal to thereby make flash discharge tube 2A emit light.

Subsequently, switch circuit 9 stops light emission by flash discharge tube 2A based on an emission stop signal from control unit 7.

As described above, according to strobe device 36 of the second exemplary embodiment, when flash discharge tube 2A emits a small quantity of light, electric power is applied to only first external triggering electrode 26A through first trigger circuit 37. On the other hand, when flash discharge tube 2A emits a large quantity of light, electric power can be applied to second external triggering electrode 27A through second trigger circuit 38 or to first and second external triggering electrodes 26 and 27A through first and second trigger circuits 37 and 38.

In this way, when the flash discharge tube emits a small quantity of light, since the discharge path is stabilized, it is possible to decrease a fluctuation in light quantity in each light emission of the strobe device. Moreover, when the flash discharge tube emits a large quantity of light, since the discharge does not concentrate on a part of the flash discharge tube, or the discharge position changes at random, it is possible to distribute the damage to glass valve 21 and to extend the lifespan of the flash discharge tube.

The strobe device of the present invention is not limited to the respective exemplary embodiments described above, various modifications can be made within a range without departing from the spirit of the present invention. Moreover, the configurations, methods, and the like of the respective embodiments described above may be arbitrarily adopted and combined with each other (the configuration, method, and the like of one exemplary embodiment may be applied to the configuration, method, and the like of the other exemplary embodiment).

Furthermore, various modifications to the configuration, method, and the like, described below may be selected arbitrarily and applied to the configurations, methods, and the like of the respective embodiments described above.

Hereinafter, various modifications to the configuration, method, and the like will be described.

In strobe device 34 of the first exemplary embodiment and strobe device 36 of the second exemplary embodiment, although an example in which in the second mode, switching unit 35 or control unit 7 applies the voltage to first and second external triggering electrodes 26A and 27A has been described, the present invention is not limited to this. For example, when the attachment area to flash discharge tube 2A, of second external triggering electrode 27A is larger than the attachment area of first external triggering electrode 26A, in the second mode, switching unit 35 or control unit 7 may apply the voltage to only second external triggering electrode 27A.

In the case of strobe devices 34 and 36 including flash discharge tube 2 shown in Figs. 2A and 2B of the respective embodiments, switching unit 35 or control unit 7 select a predetermined number of external triggering electrodes and applies the voltage thereto in the first mode in which flash discharge tube 2A emits a small quantity of light. In this case, in the second mode in which flash discharge tube 2 emits a large quantity of light, a number of external triggering electrodes may be selected and the voltage may be applied thereto so that the attachment area of the selected external triggering electrodes is larger than the attachment area to flash discharge tube 2, of the predetermined number of external triggering electrodes selected in the first mode. Specifically, when flash discharge tube 2 shown in Figs. 2A and 2B is used, in the first mode, switching unit 35 or control unit 7 selects a part (predetermined number) of external triggering electrodes among eight (first to eighth) external triggering electrodes 26 to 33 and applies the voltage thereto. In the second mode, switching unit 35 or control unit 7 may select a combination of eight (first to eighth) external triggering electrodes 26 to 33 and apply the voltage thereto so that the attachment area to flash discharge tube 2, of the selected combination of external triggering electrodes is larger than the attachment area to flash discharge tube 2, of the external triggering electrodes selected in the first mode.

Moreover, in strobe device 36 of the second exemplary embodiment, although an example where second trigger circuit 38 is connected to second external triggering electrode 27A has been described, the present invention is not limited to this. For example, second trigger circuit 38 may also be connected to first external triggering electrode 26. In this case, when control unit 7 makes flash discharge tube 2A emit light in the second mode, only second trigger circuit 38 may apply a voltage to first and second external triggering electrodes 26A and 27A.

Moreover, when the attachment area to flash discharge tube 2A, of second external triggering electrode 27A is larger than the attachment area of the first external triggering electrode 26A, and control unit 7 makes flash discharge tube 2 emit light in the second mode, second trigger circuit 38 may apply the voltage to only second external triggering electrode 27.

Moreover, in the respective exemplary embodiments, although an example where a strobe device is mounted on a mobile phone has been described as mobile device 10, the present invention is not limited to this. For example, the same effects can be obtained when the strobe device is mounted on a digital still camera or the like.

The strobe device of the present invention includes a flash discharge tube; a plurality of external triggering electrodes formed on an outer surface of the flash discharge tube; a trigger circuit that outputs a trigger signal to the external triggering electrodes making the flash discharge tube emit light at predetermined timing; and a control unit that controls and directs the trigger circuit to switch between a first mode in which a voltage is applied to any of the plurality of external triggering electrodes having a predetermined attachment area to the flash discharge tube, and a second mode in which a voltage is applied to another of the external triggering electrodes having an area larger than the predetermined area.

With this configuration, when the flash discharge tube emits a small quantity of light, by switching to the first mode in which the external triggering electrode of which the attachment area to the flash discharge tube is determined to have a predetermined area is selected to be supplied with the voltage, it is possible to decrease a fluctuation of light quantity in each light emission by the flash discharge tube. Moreover, when the flash discharge tube emits a large quantity of light, by switching to the second mode in which the external triggering electrode of which the attachment area to the flash discharge tube is determined to have a larger area than the predetermined area is selected to be supplied with the voltage, it is possible to change the discharge path in each light emission and to reduce a load applied to the flash discharge tube.

Moreover, according to the present invention, it is preferable that the strobe device includes a switching unit that switches the first and second modes.

Moreover, according to the present invention, it is preferable that the control unit applies the voltage to the external triggering electrode after switching the first and second modes.

With this configuration, the control unit can apply the voltage to the external triggering electrode after switching the first and second modes. As a result, the voltage can be prevented from being applied to the external triggering electrode before the first and second modes are switched.

Moreover, according to the present invention, it is preferable that the control unit switches to the first mode when making the flash discharge tube emit a small quantity of light and switches to the second mode when making the flash discharge tube emit a large quantity of light.

With this configuration, when the flash discharge tube emits a small quantity of light, by selecting the first mode, it is possible to stabilize the discharge path and to obtain uniform light emission. Moreover, when the flash discharge tube emits a large quantity of light, by selecting the second mode, it is possible to reduce the load applied to the flash discharge tube to thereby realize the flash discharge tube having excellent reliability.

Moreover, the strobe device of the present invention includes a flash discharge tube; a plurality of external triggering electrodes formed on an outer surface of the flash discharge tube; a first trigger circuit that outputs a trigger signal so as to apply a voltage to the external triggering electrode having a predetermined attachment area to the flash discharge tube among the plurality of external triggering electrodes for making the flash discharge tube emit light at predetermined timing; a second trigger circuit that outputs the trigger signal so as to apply a voltage to the external triggering electrode having an attachment area larger than the predetermined area to the flash discharge tube among the plurality of external triggering electrodes; and a control unit that switches between a first mode in which the voltage is applied to the external triggering electrode connected to the first trigger circuit and a second mode in which the voltage is applied to the external triggering electrode connected to the second trigger circuit and controls the trigger signal of the first and second trigger circuits.

With this configuration, when the flash discharge tube emits a small quantity of light, by switching to the first mode in which the external triggering electrode of which the attachment area to the flash discharge tube is determined to have a predetermined area is selected to be supplied with the voltage, it is possible to decrease a fluctuation of light quantity in each light emission by the flash discharge tube. Moreover, when the flash discharge tube emits a large quantity of light, by switching to the second mode in which the external triggering electrode of which the attachment area to the flash discharge tube is determined to have a larger area than the predetermined area is selected to be supplied with the voltage, it is possible to change the discharge path in each light emission and to reduce the load applied to the flash discharge tube.

Moreover, according to the present invention, it is preferable that the control unit applies the voltage to the external triggering electrode through the first or second trigger circuit after switching the first and second modes.

With this configuration, the control unit can apply the voltage to the external triggering electrode after switching the first and second modes. As a result, the control unit can prevent the voltage from being applied to the external triggering electrode before the first and second modes are switched.

Moreover, according to the present invention, it is preferable that the control unit switches to the first mode when making the flash discharge tube emit a small quantity of light and switches to the second mode when making the flash discharge tube emit a large quantity of light.

With this configuration, when the flash discharge tube emits a small quantity of light, by switching to the first mode, it is possible to stabilize the emission timing of the flash discharge tube. Moreover, when making the flash discharge tube emit a large quantity of light, by switching to the second mode, it is possible to reduce the load applied to the flash discharge tube.

### INDUSTRIAL APPLICABILITY

The present invention is useful in a technical field of a strobe device, a mobile device, and the like where it is required to decrease a fluctuation in each light emission when a small quantity of light is emitted and to suppress a damage to a flash discharge tube when a large quantity of light is emitted.

### REFERENCE MARKS IN THE DRAWINGS

1, 34, 36: STROBE DEVICE
2, 2A: FLASH DISCHARGE TUBE
3: EXTERNAL TRIGGERING ELECTRODE
4: CAPACITOR
5: BATTERY POWER SUPPLY
6: BOOST CHOPPER CIRCUIT
7: CONTROL UNIT
8: TRIGGER CIRCUIT
9: SWITCH CIRCUIT
10: MOBILE DEVICE (MOBILE PHONE)
11: FIRST MAIN BODY
12: HINGE MECHANISM
13: SECOND MAIN BODY
14: OPERATION KEY UNIT
15: MICROPHONE
16: SOUNDER
17: SPEAKER
18: FIRST DISPLAY
19: SECOND DISPLAY
20: OPTICAL SYSTEM
21: GLASS VALVE
22: BEAD GLASS
23: NOBLE GAS
24: ELECTRODE
25: SINTERED METAL
26, 26A: FIRST EXTERNAL TRIGGERING ELECTRODE
27, 27A: SECOND EXTERNAL TRIGGERING ELECTRODE
28: THIRD EXTERNAL TRIGGERING ELECTRODE
29: FOURTH EXTERNAL TRIGGERING ELECTRODE
30: FIFTH EXTERNAL TRIGGERING ELECTRODE
31: SIXTH EXTERNAL TRIGGERING ELECTRODE
32: SEVENTH EXTERNAL TRIGGERING ELECTRODE
33: EIGHTH EXTERNAL TRIGGERING ELECTRODE
35: SWITCHING UNIT
37: FIRST TRIGGER CIRCUIT
38: SECOND TRIGGER CIRCUIT

## Claims

1. A strobe device comprising:
a flash discharge tube;
a plurality of external triggering electrodes formed on an outer surface of the flash discharge tube;
a trigger circuit that outputs a trigger signal to the external triggering electrodes making the flash discharge tube emit light at predetermined timing; and
a control unit that controls and directs the trigger circuit to switch between a first mode in which a voltage is applied to any of the plurality of external triggering electrodes having a predetermined attachment area to the flash discharge tube, and a second mode in which a voltage is applied to another of the external triggering electrodes having an area larger than the predetermined area.

2. The strobe device of claim 1, further comprising a switching unit that switches the first and second modes.

3. The strobe device of claim 1,
wherein the control unit applies the voltage to the external triggering electrode after switching the first and second modes.

4. The strobe device of claim 1,
wherein the control unit switches to the first mode when making the flash discharge tube emits a small quantity of light and switches to the second mode when making the flash discharge tube emits a large quantity of light.

5. A strobe device comprising:
a flash discharge tube;
a plurality of external triggering electrodes formed on an outer surface of the flash discharge tube;
a first trigger circuit that outputs a trigger signal so as to apply a voltage to the external triggering electrode having a predetermined attachment area to the flash discharge tube among the plurality of external triggering electrodes for making the flash discharge tube emit light at predetermined timing;
a second trigger circuit that outputs the trigger signal so as to apply a voltage to the external triggering electrode having an attachment area larger than the predetermined area to the flash discharge tube among the plurality of external triggering electrodes; and
a control unit that switches between a first mode in which the voltage is applied to the external triggering electrode connected to the first trigger circuit, and a second mode in which the voltage is applied to the external triggering electrode connected to the second trigger circuit and controls the trigger signal of the first and second trigger circuits.

6. The strobe device of claim 5,
wherein the control unit applies the voltage to the external triggering electrode through the first or second trigger circuit after switching the first and second modes.

7. The strobe device of one of claims 5 and 6,
wherein the control unit switches to the first mode when making the flash discharge tube emit a small quantity of light and switches to the second mode when making the flash discharge tube emit a large quantity of light.

8. A mobile device comprising the strobe device of any one of claims 1 to 7.
